# EUROPEAN PATENT SPECIFICATION

(11) **EP 4 253 767 B1**
(45) Date of publication and mention of the grant of the patent: **22.10.2025**
(21) Application number: 22425014.2
(22) Date of filing: 29.03.2022
(51) Int. Cl.: F15B 15/14

(54) **METHOD OF MANUFACTURING A FLUID ACTUATOR**
VERFAHREN ZUR HERSTELLUNG EINES FLUIDAKTUATORS
PROCÉDÉ DE FABRICATION D'UN ACTIONNEUR À FLUIDE

(43) Date of publication of application: 04.10.2023
(73) Proprietor: Microtecnica S.r.l., 10126 Turin (IT)
(72) Inventor: Molinelli, Dario, 10126 Torino (IT); Restuccia, Michele, 10126 Torino (IT); Maino, Franco, 10126 Torino (IT); Artoni, Ettore Egisto, 10126 Torino (IT); Marongiu, Francesco, 10126 Torino (IT)
(74) Representative: Casalonga

(56) References cited:
- EP-A2- 0 208 332
- US-A- 3 343 460
- US-A1- 2003 115 735

## Description

This invention relates to methods of manufacture of fluid actuators, and in particular to the manufacture of fluid actuators with decreased leakage and improved and consistent frequency response characteristics.

EP 0208332 A1 discloses a high pressure, fluid-driven tension actuator which is, axially contractible upon inflation by a suitable fluid. Such actuators are, when inflated, constrained by meridian and parallel elements which are knitted. Constructing the high pressure tension actuators with knitted constraining elements includes the steps of pulling the knitted sleeve onto the bladder, inserting and binding the fluid conduit or conduits into their respective polar locations, inflating the assembly, coating the bladder and sleeve with bonding material, setting the bonding material, e.g. by blowing hot air on it, delating and elongating the assembly, and curing the bonding material at an elevated temperature below the melting temperature of the bonding material. US 3343460 A discloses a method of manufacturing a fluid actuator.

Actuators with decreased leakage and improved and consistent frequency response characteristics relative to currently known actuators are desirable generally. Such actuators are particularly desirable for safety critical uses where leakage and / or unpredictable or inconsistent frequency response characteristics are detrimental to the performance and hence safety of the apparatus in which such actuators are located. An example of such actuators are the actuators for use in the control of helicopter or other rotorcraft actuation system rods.

According to the present invention there is provided a method of manufacturing a fluid actuator as defined in claim 1.

In an embodiment of the above embodiment, the actuator comprises an actuator body and an actuator arm which can move between a retracted and an extended position. The actuator includes one or more seals between the actuator body and actuator arm. Those seals are formed from an elastomeric element, typically called a seal energizer, and a Polytetrafluoroethylene (PTFE) seal element, also called seal cap.

In an embodiment of any of the above embodiments, the curing of the actuator is performed in a temperature controlled environment, for example in an oven or a climatic chamber.

In an embodiment of any of the above embodiments, after curing, the actuator is removed from the oven and allowed to cool to ambient temperature.

An advantage of the method off the present invention is that the heating of the actuator and the curing of the actuator, and in particular the seals within the actuator, that results from that heating creates an actuator with consistent and predictable frequency response characteristics both immediately after the curing of the actuator and the seals therein by exposure to the heating profile, and after exposure to the levels of vibration experienced by the components of helicopters or other rotorcraft.

In an embodiment of any of the above embodiments, the predetermined heating profile comprises at least one heating phase, and at least one temperature maintenance phase.

In an embodiment of any of the above embodiments, at least one heating phase comprises heating the actuator at a heating rate of between 80 °C and 200 °C per hour. The heating rate is the rate at which the temperature of the actuator rises.

In an embodiment of any of the above embodiments, each heating phase comprises heating the actuator at a heating rate of between 80 °C and 200 °C per hour.

In an embodiment of any of the above embodiments, the heating rate is between 90 °C and 110 °C per hour.

In an embodiment of any of the above embodiments, the heating rate is 96 °C ± 4 °C, ± 3 °C, or ± 2 °C per hour.

In an embodiment of any of the above embodiments, the heating profile comprises a first and a second heating phase. The first heating phase occurs chronologically before the second heating phase.

In an embodiment of any of the above embodiments, the first heating phase has a longer duration than the second heating phase.

In an embodiment of any of the above embodiments, the first heating phase has a period of between 1.0 and 1.5 hours, and optionally of 1.25 hours.

In an embodiment of any of the above embodiments, the second heating phase has a period of between 0.1 and 0.2 hours, and optionally of 0.15 hours.

In an embodiment of any of the above embodiments the temperature of the actuator at the end of a first heating phase is between 115 °C and 125 °C.

In an embodiment of any of the above embodiments the temperature of the actuator at the end of the second heating phase is between 5 °C and 15 °C hotter than the temperature at the end of the first heating phase.

In an embodiment of any of the above embodiments, the temperature of the actuator at the end of the first heating phase is 120 °C.

In an embodiment of any of the above embodiments, the temperature of the actuator at the end of the second heating phase is 135 °C.

In an embodiment of any of the above embodiments, the heating profile comprises a first and a second temperature maintenance phase. A temperature maintenance phase is a phase during which the actuator is kept at a consistent temperature ± 4 °C, at a consistent temperature ± 3 °C, at a consistent temperature ± 2 °C, or at a consistent temperature ± 1 °C.

In an embodiment of any of the above embodiments, the second temperature maintenance phase has a longer duration than the first temperature maintenance phase.

In an embodiment of any of the above embodiments, the second temperature maintenance phase has a duration of between 2.5 and 3.5 times the duration of the first temperature maintenance phase.

In an embodiment of any of the above embodiments, the first temperature maintenance phase has a duration of between 2.7 and 3.3 hours, or 3.0 hours.

In an embodiment of any of the above embodiments, the second temperature maintenance phase has a duration in the range of 8 to 9 hours.

The present disclosure will be further described and explained by way of example and with reference to the accompanying drawings in which
Figure 1 shows a schematic sectional view of a representative actuator;
Figure 2 shows a flow chart of an embodiment of a method according to the present invention;
Figure 3 shows an embodiment of a heating profile used in the method of Figure 2;
Figure 4 shows details of the frequency response characteristics of an actuator according to Figure 1 manufactured according to the method of Figure 2 after the actuator has been subject to the heating profile of Figure 3; and
Figure 5 shows details of the frequency response characteristics of an actuator according to Figure 1 manufactured according to the method of Figure 2 after the actuator has been subject to the vibrations typical of a rotorcraft.

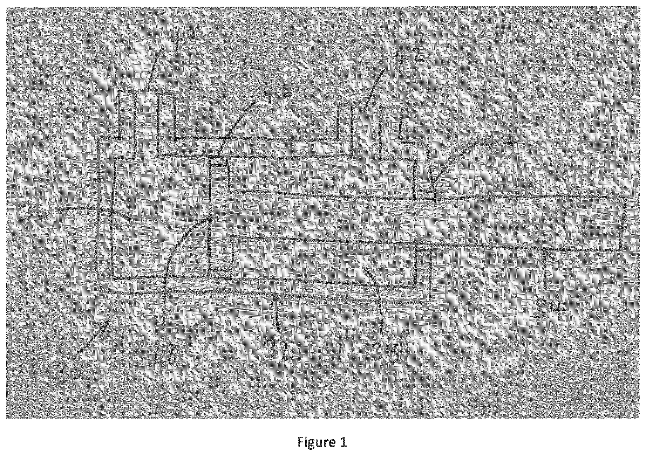

With reference to Figure 1, an actuator 30 comprises an actuator body 32 and an actuator arm 34. The actuator body 32 defines a void which is split into a first chamber 36 and a second chamber 38 by a first end 48 of the actuator arm 34. One or more seals 46 extend between the first end 48 of the actuator arm 34 and the actuator body 32. The seal or seals 46 prevent fluid communication between the first and second chambers 36, 38.

The actuator arm 34 extends out of the actuator body 32 via an aperture (not labelled). The face or faces of the actuator body that define the aperture support one or more seals 44. The seal or seals 44 prevent fluid communication between the second chamber 38 and the outside of the actuator body 32.

Fluid may enter into and exit from the first chamber 36 via a conduit 40. Fluid may be enter into and exit from the second chamber 38 via a conduit 42. In use, fluid will enter one of the first and second chambers 36, 38 and exit the other of the chambers. Entry and exit of the fluid into/out of the first and second chambers 36, 38 causes the actuator arm 34 to move between a retracted position where the first chamber 36 has a minimum volume and second chamber 38 a maximum volume, and an extended position where the first chamber 36 has a maximum volume and second chamber 38 a minimum volume.

A factor that affects the frequency response of the actuator 30 is the friction and other characteristics of the seals 44, 46 in the actuator.

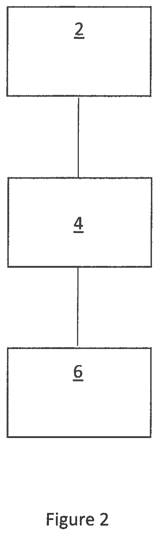

With reference to Figure 2, to improve the frequency response of the actuator 30 and to render that frequency response more consistent over time, that is during the working life of the actuator 30, the actuator 30 is first assembled in method step 2 of Figure 2. The actuator 30 is next, in method step 4, placed into an oven (not shown) and exposed to a predetermined heating profile. Once the heating profile is completed, the actuator 30 is, in method step 6, removed from the oven and allowed to cool to ambient temperature. The actuator 30 may then be used, for example in a helicopter, to move a control rod engaged with a lower swash plate of the helicopter.

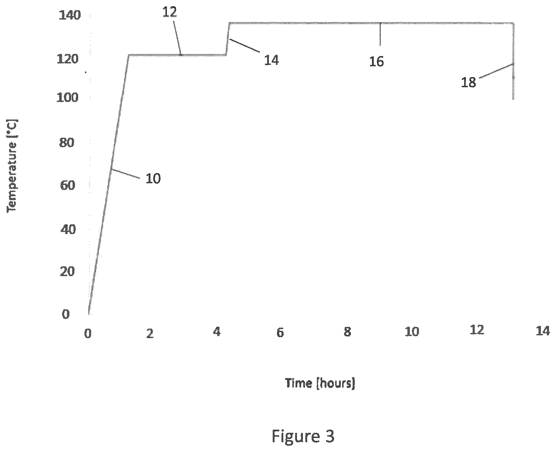

With reference to Figure 3, an example of a heating profile according to the present disclosure is shown as a plot of the temperature of the actuator against time. In the heating profile the actuator 30 is heated by the oven for a first heating phase 10. The gradient of the plot for heating phase 10 indicates the heating rate in the first phase. In the illustrated embodiment the gradient represents a heating rate of 96 °C per hour.

Once the actuator has reached a predetermined temperature (120 °C in the present embodiment) the oven ceases to increase the temperature of the actuator 30. The oven and actuator 30 now enters a first temperature maintenance phase 12 during which phase the oven keeps the actuator 130 at a temperature of 120 °C ± 4 °C. The first temperature maintenance phase 12 has a period of 3 hours.

At the end of the first temperature maintenance phase 12 a second heating phase 14 commences. The second heating phase14 raises the temperature of the actuator 30 by 15 °C to a temperature of 135 °C. Again the heating rate of the actuator 30 is 96 °C per hour.

When the actuator 30 achieves the temperature of 135 °C the second temperature maintenance phase 16 starts. The second temperature maintenance phase 16 has a period of between 8 and 9 hours.

At the end of the second temperature maintenance phase 16 the actuator 30 is removed from the oven and allowed to cool to ambient temperature as represented by plot 18 in Figure 3.

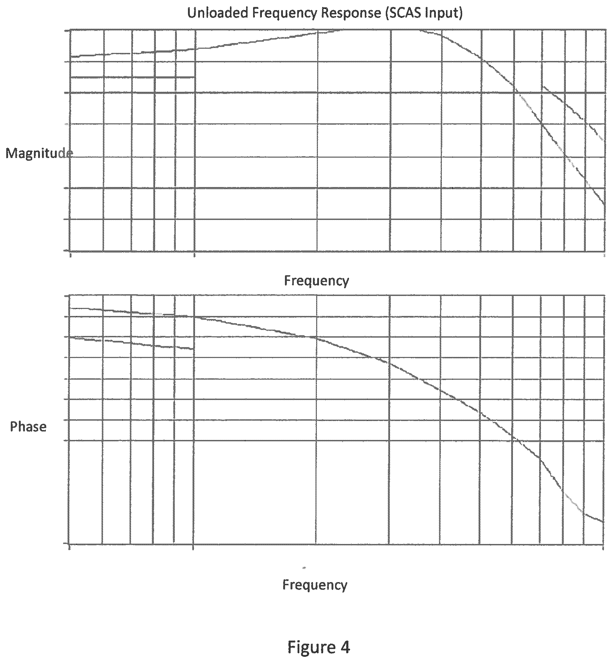

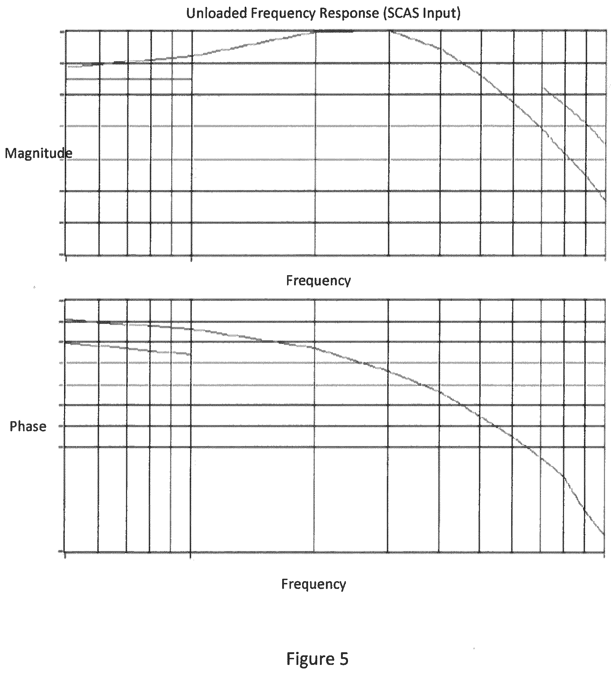

With reference to Figures 4 and 5, these show the frequency response plots for the actuator 30 after the actuator 30 has returned to ambient temperature (Figure 4), and after the actuator has been exposed to levels of vibration that are typically experienced by components of a helicopter (Figure 5). It may be seen that the frequency responses are very similar to each other.

The frequency response plots were obtained by a Fast Fourier Transform (FFT) method, with input and output signals representative of typical helicopter main rotor actuation operation. The hydraulic fluid within the actuator was at room temperature. The above description is meant to be exemplary only, and one skilled in the art will recognize that changes may be made to the embodiments described as long as not departing from the scope of the invention as defined in the appended claims.

## Claims

1. A method of manufacturing a fluid actuator (30) which comprises an actuator body (32) which defines a void, an actuator arm (34), wherein the void is split into a first chamber (36) and a second chamber (38) by a first end (48) of the actuator arm (34), and one or more seals (46) extending between the first end (48) of the actuator arm (34) and the actuator body (32), the method comprising assembling the fluid actuator (30) comprising the actuator body (32) defining the void, the actuator arm (34) splitting the void into the first chamber (36) and the second chamber (38) by the first end of the actuator arm (34) and the one or more seals (46) extending between the first end of the actuator arm (34) and the actuator body (32) and **characterized in that** the method further comprises curing the assembled fluid actuator (30) using a predetermined heating profile.

2. A method according to claim 1 in which the predetermined heating profile comprises at least one heating phase (10, 14), and at least one temperature maintenance phase (12, 16).

3. A method according to claim 2 in which at least one heating phase (10, 14) comprises heating the actuator (30) at a heating rate of between 80 °C and 200 °C per hour.

4. A method according to claim 3 in which each heating phase (10, 14) comprises heating the actuator (30) at a heating rate of between 80 °C and 200 °C per hour.

5. A method according to claim 3 or 4 in which the heating rate is between 90 °C and 110 °C per hour.

6. A method according to any of claims 1 to 5 in which the heating profile comprises a first and a second heating phase (10, 14).

7. A method according to claim 6 in which the first heating phase (10) has a longer duration than the second heating phase (14).

8. A method according to claim 6 or 7 in which the first heating phase (10) has a period of between 1.0 and 1.5 hours, and optionally of 1.25 hours.

9. A method according to any of claims 6 to 8 in which the second heating phase (14) has a period of between 0.1 and 0.2 hours, and optionally of 0.15 hours.

10. A method according to any of claims 6 to 9 in which one or both of the temperature of the actuator (30) at the end of the first heating phase (10) is 120 °C, and the temperature of the actuator (30) at the end of the second heating phase (14) is 135 °C.

11. A method according to any of claims 1 to 9 in which the heating profile comprises a first and a second temperature maintenance phase (12, 16).

12. A method according to claim 11 in which the second temperature maintenance phase (16) has a longer duration than the duration of the first temperature maintenance phase (12).

13. A method according to claim 11 or 12 in which the first temperature maintenance phase (12) has a duration of 3 hours or between 2.7 and 3.3 hours.

14. A method according to any of claims 11 to 13 in which the second temperature maintenance phase (16) has a duration in the range of about 8 to about 9 hours.

## Patentansprüche

1. Verfahren zur Herstellung eines Fluidaktuators (30), das einen Aktuatorkörper (32) umfasst, der einen Hohlraum definiert, einen Aktuatorarm (34), wobei der Hohlraum durch ein erstes Ende (48) des Aktuatorarms (34) in eine erste Kammer (36) und eine zweite Kammer (38) unterteilt ist, und eine oder mehrere Dichtungen (46), die sich zwischen dem ersten Ende (48) des Aktuatorarms (34) und dem Aktuatorkörper (32) erstrecken, wobei das Verfahren das Zusammenbauen des Fluidaktuators (30) umfasst, der den Aktuatorkörper (32), der den Hohlraum definiert, den Aktuatorarm (34), der den Hohlraum durch das erste Ende des Aktuatorarms (34) in die erste Kammer (36) und die zweite Kammer (38) unterteilt, und die eine oder mehreren Dichtungen (46) umfasst, die sich zwischen dem ersten Ende des Aktuatorarms (34) und dem Aktuatorkörper (32) erstrecken, und **dadurch gekennzeichnet, dass** das Verfahren ferner das Aushärten des zusammengebauten Fluidaktuators (30) unter Verwendung eines vorbestimmten Heizprofils umfasst.

2. Verfahren nach Anspruch 1, wobei das vorbestimmte Heizprofil mindestens eine Heizphase (10, 14) und mindestens eine Temperaturerhaltungsphase (12, 16) umfasst.

3. Verfahren nach Anspruch 2, wobei mindestens eine Heizphase (10, 14) das Erwärmen des Aktuators (30) mit einer Heizrate zwischen 80 °C und 200 °C pro Stunde umfasst.

4. Verfahren nach Anspruch 3, wobei jede Heizphase (10, 14) das Erwärmen des Aktuators (30) mit einer Heizrate von zwischen 80 °C und 200 °C pro Stunde umfasst.

5. Verfahren nach Anspruch 3 oder 4, wobei die Heizrate zwischen 90 °C und 110 °C pro Stunde liegt.

6. Verfahren nach einem der Ansprüche 1 bis 5, wobei das Heizprofil eine erste und eine zweite Heizphase (10, 14) umfasst.

7. Verfahren nach Anspruch 6, wobei die erste Heizphase (10) eine längere Dauer aufweist als die zweite Heizphase (14).

8. Verfahren nach Anspruch 6 oder 7, wobei die erste Heizphase (10) eine Dauer von zwischen 1,0 und 1,5 Stunden und optional von 1,25 Stunden aufweist.

9. Verfahren nach einem der Ansprüche 6 bis 8, wobei die zweite Heizphase (14) eine Dauer zwischen 0,1 und 0,2 Stunden und optional 0,15 Stunden aufweist.

10. Verfahren nach einem der Ansprüche 6 bis 9, wobei die Temperatur des Aktuators (30) an dem Ende der ersten Heizphase (10) 120 °C und/oder die Temperatur des Aktuators (30) an dem Ende der zweiten Heizphase (14) 135 °C beträgt.

11. Verfahren nach einem der Ansprüche 1 bis 9, wobei das Heizprofil eine erste und eine zweite Temperaturerhaltungsphase (12, 16) umfasst.

12. Verfahren nach Anspruch 11, wobei die zweite Temperaturerhaltungsphase (16) eine längere Dauer aufweist als die Dauer der ersten Temperaturerhaltungsphase (12).

13. Verfahren nach Anspruch 11 oder 12, wobei die erste Temperaturerhaltungsphase (12) eine Dauer von 3 Stunden oder zwischen 2,7 und 3,3 Stunden aufweist.

14. Verfahren nach einem der Ansprüche 11 bis 13, wobei die zweite Temperaturerhaltungsphase (16) eine Dauer im Bereich von etwa 8 bis etwa 9 Stunden aufweist.

## Revendications

1. Procédé de fabrication d'un actionneur de fluide (30) qui comprend un corps d'actionneur (32) qui définit un vide, un bras d'actionneur (34), dans lequel le vide est divisé en une première chambre (36) et une seconde chambre (38) par une première extrémité (48) du bras d'actionneur (34), et un ou plusieurs joints (46) s'étendant entre la première extrémité (48) du bras d'actionneur (34) et le corps d'actionneur (32), le procédé comprenant l'assemblage de l'actionneur de fluide (30) comprenant le corps d'actionneur (32) définissant le vide, le bras d'actionneur (34) divisant le vide en la première chambre (36) et la seconde chambre (38) par la première extrémité du bras d'actionneur (34) et les un ou plusieurs joints (46) s'étendant entre la première extrémité du bras d'actionneur (34) et le corps d'actionneur (32) et **caractérisé en ce que** le procédé comprend en outre le durcissement de l'actionneur de fluide (30) assemblé à l'aide d'un profil de chauffage prédéterminé.

2. Procédé selon la revendication 1, dans lequel le profil de chauffage prédéterminé comprend au moins une phase de chauffage (10, 14), et au moins une phase de maintien de température (12, 16).

3. Procédé selon la revendication 2, dans lequel au moins une phase de chauffage (10, 14) comprend le chauffage de l'actionneur (30) à une vitesse de chauffage comprise entre 80 °C et 200 °C par heure.

4. Procédé selon la revendication 3, dans lequel chaque phase de chauffage (10, 14) comprend le chauffage de l'actionneur (30) à une vitesse de chauffage comprise entre 80 °C et 200 °C par heure.

5. Procédé selon la revendication 3 ou 4, dans lequel la vitesse de chauffage est comprise entre 90 °C et 110 °C par heure.

6. Procédé selon l'une quelconque des revendications 1 à 5, dans lequel le profil de chauffage comprend des première et seconde phases de chauffage (10, 14).

7. Procédé selon la revendication 6, dans lequel la première phase de chauffage (10) présente une durée plus longue que la seconde phase de chauffage (14).

8. Procédé selon la revendication 6 ou 7, dans lequel la première phase de chauffage (10) présente une période comprise entre 1,0 et 1,5 heure, et facultativement de 1,25 heure.

9. Procédé selon l'une quelconque des revendications 6 à 8, dans lequel la seconde phase de chauffage (14) présente une période comprise entre 0,1 et 0,2 heure, et facultativement de 0,15 heure.

10. Procédé selon l'une quelconque des revendications 6 à 9, dans lequel la température de l'actionneur (30) à la fin de la première phase de chauffage (10) est de 120 °C et/ou la température de l'actionneur (30) à la fin de la seconde phase de chauffage (14) est de 135 °C.

11. Procédé selon l'une quelconque des revendications 1 à 9, dans lequel le profil de chauffage comprend des première et seconde phases de maintien de température (12, 16).

12. Procédé selon la revendication 11, dans lequel la seconde phase de maintien de température (16) présente une durée plus longue que la durée de la première phase de maintien de température (12).

13. Procédé selon la revendication 11 ou 12, dans lequel la première phase de maintien de température (12) présente une durée de 3 heures ou entre 2,7 et 3,3 heures.

14. Procédé selon l'une quelconque des revendications 11 à 13, dans lequel la seconde phase de maintien de température (16) présente une durée dans la plage d'environ 8 à environ 9 heures.
